Europäisches Patentamt

European Patent Office

Office européen des brevets

(19)

(11) Veröffentlichungsnummer : **0 184 053**
**B1**

(12) **EUROPÄISCHE PATENTSCHRIFT**

(45) Veröffentlichungstag der Patentschrift :
07.09.88

(51) Int. Cl.⁴ : **B 60 L 15/38**

(21) Anmeldenummer : **85114537.5**

(22) Anmeldetag : **15.11.85**

(54) Schaltungsanordnung zur automatischen Richtungserkennung der einander zugewandten Triebfahrzeugseiten für mindestens zwei miteinander gekuppelte Triebfahrzeuge (Doppeltraktion).

(30) Priorität : **30.11.84 DE 3443671**

(43) Veröffentlichungstag der Anmeldung :
**11.06.86 Patentblatt 86/24**

(45) Bekanntmachung des Hinweises auf die Patenterteilung : **07.09.88 Patentblatt 88/36**

(84) Benannte Vertragsstaaten :
**AT CH DE IT LI SE**

(56) Entgegenhaltungen :
**BBC NACHRICHTEN, Band 62, Nr. 8/9, 1980, Seiten 344-350, Mannheim, DE; K. BÄCKER et al.: "Neue Wendezüge Rhein-Ruhr mit zeitmultiplexer Wendezugsteuerung"**
**BBC NACHRICHTEN, Band 46, Nr. 5, Mai 1964, Seiten 282-286, Mannheim, DE; W. DECK et al.: "TMF-Steuerung von Grubenlokomotiven unter Tage"**

(73) Patentinhaber : **BBC Brown Boveri Aktiengesellschaft**
**Kallstadter Strasse 1**
**D-6800 Mannheim 31 (DE)**

(72) Erfinder : **Schneider, Rüdiger**
**Brunnenstrasse 2**
**D-6943 Buchklingen (DE)**

(74) Vertreter : **Kempe, Wolfgang, Dr. et al**
**c/o BROWN, BOVERI & CIE AG ZPT Postfach 351**
**D-6800 Mannheim 31 (DE)**

EP 0 184 053 B1

## Beschreibung

Die Erfindung bezieht sich auf eine Schaltungsanordnung zur automatischen Richtungserkennung der einander zugewandten Triebfahrzeugenden für mindestens ein führendes und ein geführtes gekuppeltes Triebfahrzeug (Doppeltraktion), wobei jedem Triebfahrzeug ein Übertragungssystem, das über eine zweiadrige Übertragungsleitung mit dem Übertragungssystem in dem anderen Triebfahrzeug verbunden ist, zur Steuerung des Triebfahrzeuges zugeordnet ist, und jeder Zugsteueranlage in Abhängigkeit von der führenden bzw. geführten Funktion des Triebfahrzeuges eine festgelegte Sende- und eine festgelegte Empfangsfrequenz zugeordnet sind.

Die herkömmliche Wendezugsteuerung und auch die Doppeltraktion werden durch ein sechsunddreißigadriges Kabel ermöglicht, über das alle Befehle von dem Steuerwagen zur Lok und alle Meldungen von der Lok zum Steuerwagen (bzw. zur Lok) geleitet wurden. Dabei muß sichergestellt sein, daß der Vorwärts- und der Rückwärts-Befehl fahrtrichtungsrichtig in der geführten Lok ausgeführt wird. Für diesen Zweck sind die entsprechenden Leitungen gekreuzt. Bei neueren Fahrzeugsteuerungen werden Fernwirksysteme mit serieller Übertragung eingesetzt, die nur eine zweiadrige Übertragungsleitung benötigen. Die Richtungsbefehle Vorwärts/Rückwärts müssen auf dem geführten Fahrzeug abhängig vom in Fahrtrichtung gekuppelten Führerstand an die Steuerung ausgegeben werden. Die Fahrtrichtungserkennung soll automatisch auf dem geführten Fahrzeug geschehen.

Diese Aufgabe wird gemäß der Erfindung dadurch gelöst, daß in jedem Triebfahrzeug die zweiadrige Übertragungsleitung durch Öffnen von Durchschaltekontakten auftrennbar ist, daß mittels Umschaltkontakten das Übertragungssystem mit dem kontinuierlich arbeitenden Frequenzsender und der Empfangseinrichtung in einem unregelmäßigen Takt wechselweise an die beiden abgehenden Übertragungsleitungsteile anschaltbar ist, und daß eine Steueranordnung für die Umschalt- und Durchschaltkontakte so ausgebildet ist, daß bei Empfang der Frequenz des Übertragungssystems auf dem anderen Triebfahrzeug d. h. bei gleichzeitigem gegenseitigen Empfang, das unregelmäßige Umschalten beendet und nach einer kurzen Prüfzeit die Übertragungsleitung durchgeschaltet und die Richtungsanzeige und/oder der Richtungsentscheid an die Fahrzeugsteuerung geschaltet wird. Das beschriebene Verfahren eignet sich prinzipiell auch für mehr als ein geführtes Fahrzeug.

Die Figuren zeigen ein schematisches Ausführungsbeispiel der Erfindung.

In Figur 1 sind die zweiadrige Übertragungsleitung und die notwendigen Schaltelemente dargestellt, während Einzelheiten der beiden Loks nicht enthalten sind.

Figur 2 zeigt als Blockschaltbild noch einige Schaltungsdetails der Empfangsanlage.

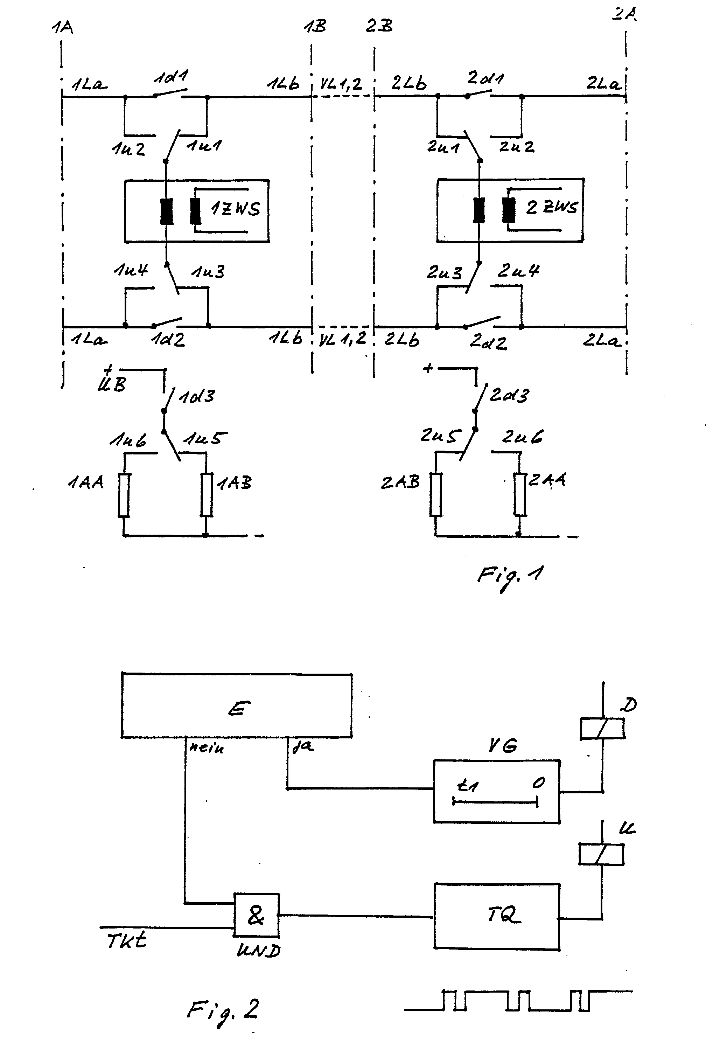

In Figur 1 ist die führende Lok mit 1 und die geführte mit 2 bezeichnet. Alle Teile der Lok 1 beginnen ebenfalls mit der Ziffer 1, während die entsprechenden Teile der Lok 2 mit der Ziffer 2 beginnen.

Im Bereich der Lok 1 sind die Schnittstellen 1A der Übertragungsleitung jeweils über die Leitung 1La, den im Ruhezustand des Relais 1D offenen Kontakt 1d1 mit der Schnittstelle 1B verbunden. Eine Verbindungsleitung VL1,2 stellt die Verbindung zwischen der Schnittstelle 1B der Lok 1 und der Schnittstelle 2B der Lok 2 her. Die Schnittstelle 2B der Lok 2 ist dann weiter über die Leitung 2Lb, den offenen Kontakt 2d1 und die Leitung 2 La mit der Schnittstelle 2A verbunden. Diese Übertragungsleitung ist zweiadrig ausgeführt und durchläuft den ganzen Zug.

Das Übertragungssystem « ZWS » der führenden Lok sendet eine bestimmte Frequenz und das Übertragungssystem der geführten Lok eine andere ebenfalls bestimmte Frequenz aus. Außerdem ist in jedem Übertragungssystem eine Empfangseinrichtung vorhanden, um die Frequenz der anderen Lok und bei Wendezugsteuerung die Frequenz des Wendezugsteuerwagens zu empfangen. Das Übertragungssystem ZWS wird über die u-Kontakte u1/u2 und u3/u4 an die Leitungsteilstücke La oder die anderen Teilstücke Lb der zweiadrigen Übertragungsleitung angeschaltet. Vorstehend wurden die die Lok jeweils bezeichnenden Ziffern weggelassen, da diese Aussagen für beide Loks gleiche Gültigkeit haben. Das Umschaltrelais U (vergl. Fig. 2) wird von einem quasi zufälligen Taktgeber impulsweise erregt und schaltet seine Kontakte u1 bis u6 entsprechend. Sobald die Kontakte 1u1 und 1u3 in der Lok 1 und 2u1 und 2u3 in der Lok 2 gleichzeitig geschlossen sind, empfängt die Empfangseinrichtung in der Lok 2 die Sendefrequenz der Lok 1 und die Empfangseinrichtung in der Lok 1 die Sendefrequenz der Lok 2. Die Empfangseinrichtungen unterbrechen den quasi zufälligen Taktgeber, so daß das Umschaltrelais seinen Schaltzustand nicht mehr ändert und nach einer kurzen Prüfzeit, die durch das Verzögerungsglied Vg festgelegt ist, sprechen die Durchschalterelais 1D und 2D an und schließen ihre Kontakte 1d1 bis 1d3 und 2d1 bis 2d3. Über die Kontakt d1 und d2 werden die Übertragungsleitungen durchgeschaltet und über die Kontakte d3 wird in jeder Lok der Stromkreis für die Richtungserkennung AA : « Seite A gekuppelt » bzw. AB « Seite B gekuppelt » eingeschaltet. Durch den Kontakt u5/6 war die entsprechende Ausgabe bereits vorgewählt worden.

In Figur 2 sind die Empfangseinrichtung E des Übertragungssystems ZWS, mit den Relais D und U dargestellt. Die Empfangseinrichtung E schaltet bei Empfang der Sendefrequenz der anderen Lok Spannung von der Nein-Leitung an die Ja-Leitung. Die Nein-Leitung ist mit dem einen Eingang des Und-Gliedes UND verbunden : an dem anderen Eingang ist die Taktleitung Tkt angeschlossen. Solange 1-Signal an der Nein-Leitung liegt, werden die über die Taktleitung Tkt zugeführten Impulse von dem Und-Glied U über die Leitung 1c an den quasizufälligen Teiler TQ weitergegeben. Durch die zugeführten Impulse wird am Ausgang des quasizufälligen Teilers ein unregelmäßiger Takt erzeugt, der auf das Umschaltrelais U einwirkt. Das Umschaltrelais wird entsprechend unregelmäßig eingeschaltet und öffnet seine Kontakte u1, u3, u5 und schließt die Kontakte u2, u4, u6 oder umgekehrt. Sobald das 1-Signal von der Nein-Leitung abgeschaltet wird, läßt das Und-Glied keinen Takt mehr durch ; der quasi zufällige Teiler wird nicht mehr beaufschlagt und das Umschaltrelais U behält seinen Schaltzustand. Gleichzeitig mit dem Abschalten des 1-Signals von der Nein-Leitung wird 1-Signal über die JA-Leitung dem Verzögerungsglied VG zugeführt. Nach Ablauf der Verzögerungsglied wird das Durchschalterelais D erregt und spricht an. Über seine Kontakte d1 und d2 wird die Übertragungsleitung durchgeschaltet und über Kontakt d3 die Richtungserkennung eingeschaltet.

## Patentansprüche

1. Schaltungsanordnung zur automatischen Richtungserkennung der einander zugewandten Triebfahrzeugenden für mindestens ein führendes und ein geführtes gekuppeltes Triebfahrzeug (Doppeltraktion), wobei jedem Triebfahrzeug ein Übertragungssystem (ZWS), das über eine zweiadrige Übertragungsleitung mit dem Übertragungssystem (ZWS) in dem anderen Triebfahrzeug verbunden ist, zur Steuerung des Triebfahrzeuges zugeordnet ist, und jeder Zugsteueranlage in Abhängigkeit von der führenden bzw. geführten Funktion des Triebfahrzeuges eine festgelegte Sende- und eine festgelegte Empfangsfrequenz zugeordnet sind, dadurch gekennzeichnet, daß in jedem Triebfahrzeug die zweiadrige Übertragungsleitung durch Öffnen von Durchschaltekontakten (d1, d2) auftrennbar ist, daß mittels Umschaltkontakten (u1/u2, u3/u4) das Übertragungssystem (ZWS) mit dem kontinuierlich arbeitenden Frequenzsender und der Empfangseinrichtung in einem unregelmäßigen Takt wechselweise an die beiden abgehenden Übertragungsleitungsteile (La, Lb) auschaltbar ist, und daß eine Steueranordnung (UND, TQ, VG, U, D) für die Umschalt- und Durchschaltkontakte so ausgebildet ist, daß bei Empfang der Frequenz des Übertragungssystems (ZWS) auf dem anderen Triebfahrzeug, d. h. bei gleichzeitigem gegenseitigem Empfang, das unregelmäßige Umschalten beendet und nach einer kurzen Prüfzeit die Übertragungsleitung durchgeschaltet und die Richtunganzeige (AA, AB) und/oder der Richtungsentscheid an die Fahrzeugsteuerung geschaltet wird.

2. Schaltungsanordnung nach Anspurch 1, dadurch gekennzeichnet, daß bei Einfachtraktion die Richtungserkennung unwirksam geschaltet und das Umschaltrelais zur Durchschaltung der Übertragungsleitungen eingeschaltet ist.

## Claims

1. Circuit arrangement for the automatic detection of the direction of the traction vehicle ends facing each other for at least one driving and one driven coupled traction vehicle (double traction), in which arrangement to each traction vehicle a transmission system (ZWS), which is connected via a two-core transmission line to the transmission system (ZWS) in the other traction vehicle, is allocated for controlling the traction vehicle, and to each train control system a fixed transmitting and a fixed receiving frequency are allocated in dependence on the driving or driven function of the traction vehicle, characterized in that in each traction vehicle, the two-core transmission line can be separated by opening through-connecting contacts (d1, d2), that the transmission system (ZWS) can be alternately connected, by means of change-over contacts (u1/u2, u3/u4) with the continuously operating frequency transmitter and the receiving device to the two outgoing transmission line sections (La, Lb) in an irregular cycle, and that a control arrangement (UND, TQ, VG, U, D) for the change-over and through-connecting contacts is constructed in such a manner that, when the frequency of the transmission system (ZWS) is received on the other traction vehicle, that is to say with simultaneous mutual reception, the irregular change-over is ended and, after a brief checking time, the transmission line is connected through and the direction indication (AA, AB) and/or the direction decision is connected to the vehicle control system.

2. Circuit arrangement according to Claim 1, characterized in that in the case of single traction, the direction detection is switched to be ineffective and the change-over relay is switched on for connecting the transmission lines through.

## Revendications

1. Agencement de circuit pour l'identification de direction automatique des extrémités tournées l'une vers l'autre de véhicules de traction pour au moins un véhicule de traction pilote et un véhicule de traction asservi couples (double traction), comprenant, associé à chaque véhicule de traction, en vue de la commande de ce dernier, un système de transmission (ZWS), qui est relié par une ligne de transmission bifilaire au système de transmission (ZWS) dans l'autre véhicule de traction, une fréquence d'émission déterminée et une fréquence de réception déterminée étant associées, selon la fonction pilote ou la fonction asservie du véhicule de traction, à chaque installation de commande de train, caractérisé en ce que dans chaque véhicule de traction la ligne de transmission bifilaire peut être sectionnée par l'ouverture de contacts de fermeture-ouverture (d1, d2), que le système de transmission (ZWS) avec l'émetteur de fréquence travaillant de façon continue et avec le dispositif de réception peut être connecté au moyen de contacts de commutation (u1/u2, u3/u4) de façon alternée à une cadence irrégulière sur les deux parties (La, Lb) de la ligne de transmission, et qu'un agencement de commande (UND, TO, VG, U, D) pour les contacts de commutation et de fermeture-ouverture est réalisé de telle façon que lors de la réception de la fréquence du système de transmission (ZWS) sur l'autre véhicule de traction, c'est-à-dire en cas de réception mutuelle simultanée, la commutation irrégulière est arrêtée et, après un court temps de contrôle, la ligne de transmission est fermée et l'indication de direction (AA et AB) et/ou la décision de direction est transmise à la commande de véhicule.

2. Agencement de circuit selon la revendication 1, caractérisé en ce qu'en cas de traction simple, l'identification de direction est rendue inefficace et le relais de commutation est commandé pour la fermeture des lignes de transmission.

Fig. 1

Fig. 2